# FASCICULE DE BREVET EUROPEEN

(11) **EP 2 115 085 B1**
(45) Date de publication et mention de la délivrance du brevet: **04.06.2014**
(21) Numéro de dépôt: 08761929.2
(22) Date de dépôt: 11.01.2008
(51) Int. Cl.: C09J 7/02

(54) **METHODE DE PROTECTION ANTIMICROBIENNE D'UNE SURFACE D'UN OBJET A L'AIDE D'UN FILM PLASTIQUE AUTO ADHESIF ANTIMICROBIEN**
METHOD FOR THE ANTIMICROBIAL PROTECTION OF AN OBJECT USING AN ANTIMICROBIAL PRESSURE-SENSITIVE ADHESIVE PLASTIC FILM
METHOD FOR THE ANTIMICROBIAL PROTECTION OF AN OBJECT USING AN ANTIMICROBIAL PRESSURE-SENSITIVE ADHESIVE PLASTIC FILM

(30) Priorité: 08.02.2007 FR 0700884
(43) Date de publication de la demande: 11.11.2009
(73) Titulaire: Hexis, 34110 Frontignan (FR)
(72) Inventeur: BAUDRION, Christophe, 34140 Bouzigues (FR); MASSON, Frédéric, 34140 Loupian (FR); MATEU, Michel, 34540 Balaruc Le Vieux (FR)
(74) Mandataire: Domange, Maxime
(86) Numéro de dépôt international: PCT/FR2008/050056
(87) Numéro de publication internationale: WO 2008/099111

(56) Documents cités:
- WO-A-98/30094
- WO-A-2006/116670
- GB-A- 1 489 494
- US-A- 5 069 907

## Description

La présente invention concerne une méthode de protection antimicrobienne d'une surface d'un objet et un film plastique auto adhésif antimicrobien utile pour cette méthode.

On connaît des peintures et vernis à propriétés antimicrobiennes utilisés pour protéger tout type de surfaces, mais essentiellement dans le domaine architectural pour la protection contre les mousses et champignons et dans le domaine maritime pour la protection des coques de bateaux contre les algues et le fouling en général tel que décrit dans US 4,221,839, US 6,559,202 ou encore US 6,251,967. Ces peintures et vernis sont appliqués directement sur l'objet à protéger. Ces revêtements de peintures ou vernis incorporent dans leur masse un agent antimicrobien, lequel leur confère un effet antimicrobien prolongé dans le temps. En effet, l'agent antimicrobien incorporé dans ledit revêtement en surface ou à proximité exerce une action antimicrobienne à l'encontre des agents microbiens extérieurs nuisibles en contact avec la surface externe du dit revêtement de peinture ou vernis. Et, les agents microbiens plus éloignés de la surface externe du revêtement peuvent migrer vers la surface externe du revêtement ou à proximité au fur et à mesure de sa consommation en surface ou à proximité.

Cette technique de protection antimicrobienne présente cependant un certain nombre d'inconvénients :
- tous les inconvénients liés à une manipulation de liquide chimique relativement toxique comportant des solvants néfastes pour l'environnement que ce soit pour le stockage, le transport et lors de l'application,
- l'application d'une peinture ou vernis est relativement technique et requiert l'intervention de personnels qualifiés ou spécialisés tels que des peintres car, la garantie de l'obtention du résultat et sa durabilité dépendent de la qualité des conditions d'application. En outre l'application d'une peinture ou vernis est longue en elle-même et nécessite de surcroît un temps de séchage additionnel, et
- les peintures et vernis antimicrobiens requièrent un renouvellement relativement fréquent, parce que ces revêtements ne présentent pas des propriétés de résistance et durabilité importantes d'une part et d'autre part l'agent antimicrobien a une action limitée dans le temps car la durée de l'action antimicrobienne du revêtement dans le temps est liée à la quantité d'agent antimicrobien actif qu'il renferme. Or, les conditions de renouvellement d'un revêtement de type peinture ou vernis nécessitent une élimination par décapage préalable de la surface de l'objet à protéger avant toute nouvelle application.

On connaît par ailleurs des films ou vernis antimicrobiens qui sont incorporés de manière non renouvelable à certains produits,notamment pour la fabrication de gants (WO 98,300,94, US 5,725,867), de containers à déchets (US 6,610,763), de bracelets d'identification (WO/2006/116670), de cathéters (US 5,091,442 et US 5,772,640), ou encore de brosses à dents (US 6,108,847). Il s'agit de traitements antimicrobiens réalisés dans le processus de fabrication lors de la production industrielle desdits objets. Ces traitements sont donc complexes et ne peuvent être réalisés directement et simplement par l'utilisateur final et encore moins renouvelés.

On connaît aussi des films à propriétés antimicrobiennes dans le domaine hospitalier, tels que pour les draps chirurgicaux et les pansements. Ils sont cependant uniquement destinés à des applications temporaires sur peau humaine, notamment dans US 4,542,012, US 5,069,907, US 5,853,750, US 6,216,699, US 6,700,032, US 6,838,078. Il ne s'agit donc pas de films appropriés pour protéger tout type de surfaces.

Dans ces applications des pansements ou draps chirurgicaux, il s'agit de libérer rapidement la substance active antimicrobienne au niveau de la surface du film en contact avec la peau du patient pour que celle-ci agisse sur la peau au contact de laquelle le film est appliqué.

Il n'existe donc pas à ce jour de produit ou méthode permettant de protéger rapidement, facilement, et durablement et de manière renouvelable tout type de surfaces contre des colonisations microbiennes.

Le problème de la présente invention est de fournir une méthode de protection antimicrobienne durable applicable et renouvelable à la surface de tout type d'objets à surface plane ou non plane qui ne soit pas incorporé au produit lui-même et qui soit : a) plus facile et moins dangereux à mettre en oeuvre en termes de stockage, de transport et d'application, b) avec des conditions d'applications ne requérant pas l'intervention d'un personnel qualifié ou spécialisé et dont la qualité du revêtement et l'effet antimicrobien recherché ne dépendent pas de la qualité de son application, et c) avec des propriétés de résistance à l'usure et durabilité de l'effet antimicrobien plus élevées, et requérant des renouvellements moins fréquents et plus simples à réaliser.

Pour ce faire, la présente invention fournit une méthode de protection antimicrobienne d'une surface plane ou non plane d'un objet matériel, c'est-à-dire autre qu'un corps humain ou animal, caractérisé en ce que l'on applique contre la surface de l'objet, la face dite interne d'un film plastique (1) auto-adhésif revêtue sur sa dite face interne d'une couche d'adhésif (2), ledit film étant constitué de PVC plastifié, ledit PVC plastifié comprenant un plastifiant polymère dans une proportion de 5 à 50% en poids dans ledit film, ledit film étant souple et étirable manuellement et apte à suivre le contour d'une dite surface, présentant un allongement à la rupture supérieur à 50% et une résistance à la traction inférieure à 6 000 N/m, et ledit film incorporant dans sa masse ou comprenant sur sa face dite externe un agent antimicrobien rendant la surface externe dudit film active contre les microbes.

On comprend que la face externe ou surface correspond à la face ou surface opposée tournée vers l'extérieur et non revêtue d'adhésif.

On entend ici donc par "protection antimicrobienne" que l'on ne cherche pas en soi à supprimer les microbes de l'objet revêtu dudit film, mais plutôt de rendre la surface externe de l'objet, par l'intermédiaire du film qu'il lui est appliqué à sa surface, active contre les microbes pour empêcher le développement et la propagation desdits microbes par contact avec la surface desdits objets.

Selon le concept original de la présente invention, on substitue la surface externe d'un film autoadhésif à la surface de contact d'un objet pour rendre celle-ci active contre les microbes.

La méthode selon la présente invention permet d'apporter une protection antimicrobienne fiable, durable et facile et rapide à mettre en oeuvre sur tout type de surface plane ou non plane. Un film selon l'invention présente aussi une garantie en termes d'homogénéité de l'effet antimicrobien indépendamment des conditions d'applications par le personnel.

La méthode selon l'invention est particulièrement avantageuse pour la protection d'une surface non plane. Le film autoadhésif étirable manuellement peut aussi, de par sa constitution, être étiré thermiquement, c'est-à-dire par chauffage.

De par son caractère autocollant, la pose du film et donc la protection antimicrobienne de surface peut être mis en oeuvre aisément par un personnel non qualifié ou un particulier sans équipement spécifique. De même, le film peut être retiré aussi aisément qu'il a été posé, et remplacé toujours sans matériel spécifique, notamment pour renouveler la protection lorsque l'agent antimicrobien est épuisé. De par son incorporation dans une matrice polymérique (la masse du film ou d'un vernis), l'effet antimicrobien s'étend sur une longue période, en général au moins plusieurs mois, notamment au moins 3 mois, voire plusieurs années car l'agent antimicrobien ne peut migrer vers la surface que relativement lentement au cours du temps. La fréquence de renouvellement du film dépend entre autres de la teneur en agent antimicrobien incorporé dans le film.

D'autre part, la flexibilité et l'aptitude à l'élongation du film adhésif permettent sa pose sur des surfaces de formes complexes. Le film peut épouser les surfaces fortement courbées ou angulaire notamment à angle droit ou aigu telles que les surfaces de poignées de porte ou pied de table à section circulaire pour les surfaces fortement courbées, ou rebords ou tranche de plateau ou pied de table à section rectangulaire voire triangulaire pour les surfaces planes à rebords angulaires.

On entend ici par:
- «étirable», un film dont l'allongement à la rupture est supérieur à 50 %, et
- «étirable manuellement» un film dont en outre la résistance à la traction est inférieure à 150 N/inch (soit inférieur à environ 6000 N/m).

Il faut en effet que le film soit étirable mais que cet étirement ne requière pas une force de traction trop élevée pour être étirable manuellement.

Ces paramètres sont mesurés en étirant le film à l'aide d'un dynamomètre et en mesurant l'allongement nécessaire à sa rupture (norme NF 41-025 de 1984) et la force de la traction nécessaire à sa rupture (norme NF 41-021). Ces valeurs sont données en N/inch pour la résistance à la traction et pourcentage d'allongement pour l'allongement à la rupture.

On considère ici qu'un film est suffisamment étirable et peut être posé aisément, notamment étiré manuellement sur une surface fortement courbe ou anguleuse, si son allongement à la rupture est supérieur à 50 % et sa résistance à la traction inférieure 150 N /inch.

Ses propriétés d'allongement à la rupture et de résistance à la traction inférieures aux valeurs limites indiquées ci-dessus, sont obtenues par la mise en oeuvre de teneur pondérale en plastifiant dans le film PVC supérieure à 0,1%, à savoir de 5 à 50%.

Plus particulièrement, ladite surface de l'objet est en matériau choisi parmi les bois, et matières rigides plastiques, minérales telles que plâtre, ciment ou autres enduits, ou métalliques. Et ledit objet est un objet ménager, un objet d'ameublement ou un objet intérieur d'immeuble, de préférence pour lieux ouverts au public et exposés au risque de contamination par contact avec lesdits objets.

Comme objets d'ameublement, on peut citer les tables, sièges, comptoirs, et comme objets intérieurs d'immeuble, on peut citer les murs, plafonds, sols, portes ou fenêtres.

Les applications visées selon la présente invention sont plus particulièrement la protection de toutes les surfaces localisées dans des lieux exposés à des risques de contamination, et notamment dans des lieux où la colonisation microbienne présente un risque hygiénique et qui ne peuvent pas être suffisamment fréquemment désinfectées, notamment dans les hôpitaux, et autres locaux à caractère médicalisé, crèches, cantines, écoles, et plus particulièrement encore halls d'entrée, comptoirs d'accueil, sur les portes, murs, sols, sièges, fenêtres, meubles divers, matériels informatiques, panneaux indicateurs et publicitaires, éléments de cuisine, de salle de toilette.

Avantageusement, le film comprend en outre des colorations ou impressions de décor ou de texte sur sa surface externe.

Il peut ainsi en outre servir de support de décoration et/ou de communication. Il peut par exemple remplacer les peintures, notamment peintures murales et papiers peints. Si la décoration ou l'élément visuel de communication deviennent surannés, le film peut être aisément et régulièrement remplacé.

Des films auto adhésifs de ce type, mais n'incorporant pas d'agent à effet antimicrobien vis à vis des contaminations externes par contact sont connus dans le domaines de la décoration, de la communication, et un très grand nombre d'autres applications telles que dans les applications de protection des bords de surfaces peintes, des systèmes de fermeture dans le domaine du packaging, les adhésifs de protection dans le domaine électrique, les étiquettes de marquage dans le domaine commercial et la papeterie; le domaine mobilier avec des films de laminage donnant un effet bois ou autre effet décoratif.

Les films auto adhésifs à usages décoratifs sont des supports colorés, écrits ou imagés, disposant sur leur face intérieure d'une couche d'adhésif permettant de les fixer sur une surface, à titre temporaire ou définitif. Tant que l'autocollant n'est pas apposé, la partie adhésive est couverte par une protection appelée liner. Lorsque les films sont colorés, ils servent généralement à la décoration de surfaces. Ils peuvent être découpés grâce à la méthode de Découpe Assistée par Ordinateur (D.A.O.) pour réaliser des formes ou des lettres. Ils sont généralement destinés à être imprimés ou sérigraphiés pour servir d'étiquettes et d'affiches publicitaires. Ils remplacent aujourd'hui la peinture dans bon nombre d'applications telles que les surfaces intérieures et extérieures de transports en commun (trains, métros, bus, tramways). Ils sont considérés comme des supports publicitaires destinés à être apposés pendant de longues durées.

Les films plastiques usuels peuvent être constitués de polyoléfines telles que les polyéthylènes ou polypropylènes, de polyesters, notamment le polyéthylène téréphtalate (PET), de polymères acryliques, de polyuréthanes et des formulations de polychlorure de vinyle (PVC).

Les films de polyoléfines ont pour avantages d'être peu coûteux, facilement étirables et conformables, si bien qu'ils sont applicables sur des surfaces non planes. Ils ont, toutefois, pour inconvénient majeur d'être peu résistants aux agressions extérieures et donc difficilement utilisables sur de longues durées. Leur surface étant relativement inerte, leur impression et adhésivage nécessite un traitement de surface préalable.

Le PET présente une excellente transparence mais sa surface est imperméable aux encres ce qui nécessite le dépôt d'une couche supplémentaire pour pouvoir être imprimé. Il est rigide et impossible à poser sur des surfaces non planes. On le destine généralement aux applications sur vitres et surfaces planes transparentes.

Des films de polymères acryliques et polyuréthanes peuvent être utilisés, mais leur coût est très élevé,

Selon la présente invention, comme mentionné ci-dessus, on met en oeuvre un film en PVC plastifié car celui-ci présente l'avantage d'être facilement étirable et donc de pouvoir être posé facilement, car un PVC pur serait trop rigide et cassant.

Selon la présente invention, on cherche à rendre le film actif en lui-même pendant une période de temps suffisante, en contrôlant la migration de la substance active en dehors du film ou du vernis. Pour ce faire, la mise en oeuvre d'un plastifiant polymère, plutôt qu'un plastifiant monomère, est avantageuse car elle permet de réduire la migration du plastifiant, lequel peut entraîner la migration de l'agent antimicrobien- quand celui-ci est inclus dans la masse du PVC, ou la dégradation du vernis ou encore le décollement du film.

En effet, un plastifiant monomère présente une forte tendance à se volatiliser, à migrer, et donc à être extrait du PVC. Il peut migrer vers la surface, emportant avec lui l'agent antimicrobien présent dans le PVC, ce qui limite donc la durabilité de l'effet antimicrobien du film. Si le plastifiant migre vers la surface, il risque aussi de contaminer les personnes au contact du film et de rendre le PVC collant. Si, au contraire, le plastifiant migre vers la profondeur, il pénètre dans l'adhésif, le ramollit et finit par provoquer le décollement du film.

Un autre inconvénient d'un plastifiant monomère est que, de par sa migration, sa concentration va diminuer dans le film PVC, lequel film va donc se rigidifier puis craqueler.

D'autre part, un plastifiant monomère est généralement une molécule aromatique, notamment dérivée de phtalate, qui jaunit rapidement lorsqu'elle est exposée aux UV, en extérieur ou derrière une vitre, comme ce peut être le cas dans l'application selon la présente invention. Or, de par leur application sur des objets, les films selon l'invention présentent une fonction décorative.

Enfin, une exsudation du plastifiant risque de dégrader le vernis en cas d'application de-la substance active dans un vernis appliqué sur la surface externe du film.

En conséquence, pour réaliser un film PVC plastifiant antimicrobien durable, il est préférable d'utiliser un plastifiant polymérique.

Ces films de PVC plastifiés peuvent être obtenus selon deux méthodes :
- le calandrage, tel que décrit dans le Handbook of Plastic Materials and Technologies, Ed. I. Rubin, Wiley & Sons, Inc. New York, 1990. Des granulés de PVC sont mélangés à différents additifs puis chauffés et malaxés pour former un ruban gélifié qui alimente une calandre. La calandre est constituée de deux cylindres tournant en sens inverse entre lesquels coule la formulation chaude de PVC. Il en ressort un film sur lequel on tire pour obtenir l'épaisseur désirée, en général comprise entre 50 et 500 µm. Un film de PVC plastifié d'une épaisseur de 80 µm possède par exemple une élongation à la rupture supérieure à 100% pour 40 N/inch dans le sens transversal. Le film étant étiré lors de sa production dans le sens longitudinal, son allongement à la rupture est plus important et sa force à la rupture plus faible dans le sens transversal que dans le sens longitudinal.
- l'enduction, généralement connus sous le nom de PVC coulé (aussi dénommé "PVC Cast"). Ces types de films sont réalisés à partir de poudres de PVC mélangées à des additifs similaires à ceux du calandrage et à des solvants. L'ensemble forme une pâte de PVC qui est étalée en ligne sur un support, lisse et passée dans un four afin d'obtenir le film qui est ensuite retiré de son support pour être enroulé. Ce film possède un allongement à la rupture identique dans les deux sens ce qui est plus avantageux pour sa pose sur des surfaces courbes. Pour des raisons de conformabilité; on préfère un film PVC obtenu par la voie coulée ("cast").

D'une manière générale, les films de PVC plastifiés sont constitués des composants suivants :
1) un polychlorure de vinyle d'une masse molaire en poids de 100 000 à 250 000.
2) des composés plastifiants présents à une teneur pondérale de 5 à 50 % qui sont dits externes car ils ne sont pas présents dans la chaîne de PVC mais libre dans le polymère.
3) le cas échéant, des colorants organiques ou pigments minéraux. Les premiers ayant une stabilité aux UV généralement mauvaise, on préfère les seconds pour des applications de longues durées en extérieur.
4) de préférence, des agents stabilisants thermiques ou UV qui assurent la tenue du film et sa résistance aux conditions extérieures de température et exposition à la lumière. Ils sont plus particulièrement présents à une teneur pondérale de 0,1 à 5%. Il existe plus particulièrement encore deux types de stabilisants UV : les absorbeurs UV dont le rôle est de capter le rayonnement UV à la place du polymère et les capteurs de radicaux qui récupèrent les radicaux libres apparus dans le film pour les empêcher de le détruire.
5) des additifs divers facilitant la production du film. Il peut s'agir d'agents débullants, d'additifs de tension, d'agents glissant, d'agents facilitant la dispersion de pigments, et autres.

Comme mentionné ci-dessus, on connaît, comme plastifiants, les plastifiants dits monomères constitués de molécules de faible masse molaire telles que des esters ou phtalate. On connaît ainsi notamment le dioctyl phtalate (DOP) ou di(2-éthylhexyle) phtalate, le diisodécyl phtalate (DIDP), le dinonyl phtalate (DNP). Ces plastifiants monomères possèdent l'inconvénient de migrer hors du PVC pendant sont utilisation ce qui, en dehors de considération éco toxicologiques, provoque sa rigidification et, à terme, sa destruction. Les films PVC réalisés à partir de ces plastifiants sont connus dans le domaine sous le nom de "PVC monomères".

Selon la présente invention, le plastifiant est, comme mentionné ci-dessus, de préférence un plastifiant polymérique, c'est-à-dire une molécule de forte masse molaire telle qu'un polyester. Il s'agit de polymères de masse molaire de 500 à 15 000. Cette masse molaire élevée les empêche de migrer à travers le PVC, ce qui lui confère une plus grande durabilité. Il s'agit de PVC connus dans l'état de l'art sous le nom de PVC polymères.

Compte tenu de propriétés discutées ci-dessus, on préfère selon la présente invention un PVC plastifié comprenant un plastifiant polymère pour éviter toute exsudation de plastifiant et empêcher, le cas échéant, une trop rapide migration de la substance active antimicrobienne incluse dans la masse du PVC.

Plus particulièrement, ledit plastifiant polymère est choisi de préférence parmi les polyesters obtenus par réaction d'un diol sur un diacide.

Il s'agit généralement de polyester ou mélange de polyesters obtenus par réaction de glycols ou de mélanges de glycols, par exemple éthylène glycol, 1,2-propylène glycol, 1,3-butylène glycol, 1,4-butylène glycol, néopentyl glycol, 1,6 hexanediol, sur des diacides, tels que des acides phtalique, sébacique, azelaique, adipique ou glutarique. On cite, plus particulièrement encore, un polyadipate de glycol. Leur masse molaire est comprise entre 500 et 15 000 g/mol, de préférence supérieure à 4 000 g/mol.

L'épaisseur du film plastique pourra être de 10 à 500 µm, de préférence de 30 à 100 µm. En général, le grammage ou masse surfacique du film plastique est de 10 à 1 000 g/m², de préférence de 20 à 200 g/m².

Dans un premier mode de réalisation, l'agent antimicrobien est incorporé au sein d'un vernis appliqué à la surface externe du film plastique, de préférence dans une teneur pondérale de 0,1 à 10%, de préférence 0,5 à 5% par rapport au poids dudit vernis. Plus particulièrement, dans ce premier mode de réalisation, la masse surfacique dudit agent antimicrobien est de 0,01 à 10 g/m², de préférence de 0,02 à 2 g/m² pour une couche de vernis de 1 à 100 g/m², de préférence de 5 à 50 g/m².

Ce mode de réalisation est plus particulièrement avantageux lorsque la surface de l'objet et donc celle du film plastique après application sur l'objet, requiert une résistance importante aux produits chimiques compte tenu des nettoyages fréquents et agressifs auxquels ils doivent être soumis pour des raisons d'hygiène, par exemple dans les hôpitaux.

Dans un second mode de réalisation, l'agent antimicrobien est incorporé dans la masse du film plastique, dans une teneur pondérale de 0,1 à 10 % de préférence 0,5 à 5 % par rapport au poids total du film. Plus particulièrement, pour un film de 10 à 1 000 g/m², de préférence de 20 à 200 g/m², le grammage ou masse surfacique de l'agent antimicrobien est de 0,01 à 100 g/m², de préférence 0,05 à 10 g/m².

Ce second mode de réalisation est plus particulièrement avantageux lorsque l'on veut obtenir un film présentant un allongement à la rupture important, notamment supérieur à 100% pour être posé sur des surfaces d'objets à forte courbure, ou forte et/ou multiples variations angulaires.

Pour ce second mode de réalisation, on préfère utiliser un film PVC obtenu par voie coulé, lequel a pour avantage d'être très facilement conformable.

Un vernis acrylique réticulé sous UV, pour résister aux produits chimiques, ne peut avoir un allongement à la rupture trop élevé notamment supérieur à 100%. Dans le premier mode de réalisation, il n'est donc pas nécessaire ni souhaitable d'utiliser un PVC plastifié coulé économiquement moins intéressant qu'un PVC calandré. Avantageusement; on incorpore l'agent antimicrobien à un vernis appliqué sur un film en PVC plastifié calandré.

Avantageusement; on incorpore l'agent antimicrobien à un vernis appliqué-sur un film en PVC plastifié calandré, de préférence présentant un allongement à la rupture inférieure à 200%, de préférence inférieur à 150%.

Dans ce premier mode de réalisation, un PVC plastifié avec un plastifiant polymérique sera préféré pour éviter toute exsudation de plastifiant dans le vernis qui provoquerait, à terme, son jaunissement et une accélération de sa dégradation.

Plus particulièrement, dans le premier mode de réalisation, pour des raisons techniques et écologiques, il est important que le vernis antimicrobien puisse être déposé aisément, séché rapidement et ne pas contenir de solvants susceptibles de s'évaporer et de contaminer l'environnement. Les vernis réticulés sous radiations présentent ce type d'avantages. Ils présentent en outre une forte résistance chimique.

La composition du vernis est aussi choisie de manière à ce que celui-ci présente une certaine élongation à la traction même après réticulation sans affecter sa résistance chimique de manière à ne pas devoir diminuer excessivement les propriétés élastiques du film plastique et plus particulièrement pour le rendre compatible avec des films supports ayant de 50 à 100% d'allongement à la rupture.

Le vernis réticulable sous radiation se compose à partir d'un mélange d'un oligomère, de composés susceptibles d'amorcer une réaction de réticulation appelé photoamorceurs, de composés dits allongeurs de chaînes, d'agent réticulant, d'additifs divers y compris des agents antimicrobiens.

On a découvert selon la présente invention, en outre, que la composition du vernis a un effet sur les propriétés antimicrobiennes du vernis, même si ses composants n'ont pas d'activité antimierobienne intrinsèque.

L'agent antimicrobien sélectionné doit être compatible et, notamment, soluble dans la formulation du vernis, avoir un spectre d'action le plus-large possible et être capable de s'exprimer dans le vernis réticulé. Différents agents antimicrobiens ont été testés, par exemple de la pyrithione de zinc, de la terbutryne, des sels d'argent, des triazines ou du triclosan. Le triclosan conserve une activité plus élevée comparativement aux autres, une fois incorporé dans un vernis acrylique.

Le vernis sera composé à partir de :
a) un oligomère, polymère de masse molaire de 500 à 10 000 g/mol, de préférence de 1 000 à 5 000 g/mol. C'est lui qui forme le corps du vernis et lui apporte ses propriétés principales. Il possède à ses extrémités des fonctions réactives telles que des époxy, maléates, vinyles, (meth)acrylates de préférence acrylates. Le squelette dudit polymère peut être un polyuréthane, un polyacrylique, un polyester, un polyéther, un polycarbonate, un époxy, de préférence un polyester. Il est présent à des concentrations variant de 15 à 80 % massiques dans le mélange, on préférera des concentrations comprises entre 20 et 60%. Ce produit est généralement très visqueux et ne peut que difficilement être utilisé seul, il est alors indispensable de le diluer dans des monomères décrits ci-dessous pour être appliqué.
b) des allongeurs de chaîne, molécules ayant de faibles masses molaires, inférieures à 500 g/mol, et de viscosité inférieure à 300 mPa.s à 25°C. Elles doivent posséder une et une seule fonction acrylate capable de réagir avec l'oligomère précédemment sélectionné. Elles ont pour objectif de diminuer la viscosité de la formulation et d'augmenter les longueurs de chaînes du polymère pour assurer l'élongation du vernis et son adhésion sur le PVC plastifié. Des exemples de monomères acrylates monofonctionnels sont : l'acrylate d'hydroxyéthyle, l'acrylate d'isobornyle, l'acrylate d'isodécyle, l'acrylate d'octyle et de décyle, le N-butyl-1,2-(acryloyloxy)éthyl carbamate. Ces composés sont présents dans le vernis à des concentrations-variant entre 1 et 60 %, de préférence entre 5 et 50 %.
c) des agents réticulants, monomères de viscosité inférieure à 2000 mPa.s à 25°C ayant au moins deux fonctions acrylates. Ces molécules participent à la dilution de l'oligomère et à la réticulation du vernis. D'une manière générale, plus leur fonctionnalité et leur concentration est importante, plus le vernis est résistant aux solvants, mais plus il est dur et cassant. Des exemples de monomères acrylates multifonctionnels sont : le diacrylate d'hexanediol, le diacrylate de dipropylèneglycol, le diacrylate de tripropylèneglycol, le triacrylate de triméthylolpropane. Ces composés sont présents dans le vernis à des concentrations variant entre 1 et 60 %, de préférence entre 5 et 50 %,
d) des photoamorceurs, molécules capables d'absorber la lumière et d'amorcer une réaction de polymérisation. Elles sont sélectionnées en fonction de leur spectre d'absorption-et du spectre d'émission des lampes utilisées pour irradier le vernis. Des exemples de photoamorceurs sont la benzophénone, la 1-hydroxy-cyclohexyl-phenyl cétone, la 2-hydroxy-2-méthyl-1-phényl-1-propanone, etc. Ils peuvent être utilisés seuls ou en couple avec d'autres amorceurs ou coamorceurs tels que des amines tertiaires. L'ensemble de photoamorçage représente entre 0,1 et 15 % de la formulation, on préférera entre 1 et 10%,
e) des additifs divers sont des molécules améliorant l'application ou les propriétés du vernis. Par exemple des agents de glissance, de tension de surface, des agents mouillants, des agents débullants, des stabilisants UV, etc. Cet ensemble d'additifs est généralement présent à des concentrations comprises entre 0,01 et 5%, on préférera entre 0,1 et 3%.

C'est en choisissant bien l'oligomère et en ajustant les concentrations d'oligomères, d'allongeurs de chaîne et d'agent réticulant que l'on contrôle la réticulation et l'élongation du vernis, mais aussi ses propriétés antimicrobiennes. On a ainsi montré qu'à concentration égale en agent antimicrobien, deux vernis n'ont pas la même activité antimicrobienne selon leur composition en oligomère, allongeur de chaîne et agents réticulants (comparer les exemples 5 et 7).

De préférence, selon la présente invention l'agent antimicrobien est incorporé dans un vernis à base d'oligomère polyester ou polyuréthane acrylate polymérisable par réticulation sous radiation lumineuse. On entend ici par vernis polyester ou polyuréthanne acrylate, un vernis à base d'oligomère à squelette polyester ou polyuréthane et fonction réactive acrylique d'extrémité.

Les meilleurs résultats sont obtenus avec un vernis polyester acrylate. Ces vernis présentent les meilleurs propriétés d'élasticité et résistance chimique combinées.

Le vernis est déposé en couches dont l'épaisseur est comprise entre 2 et 50 µm, plus précisément entre 5 et 30 µm sur le film, notamment un film PVC. Après application sur le film de la formulation du vernis, celle-ci est polymérisée en la passant sous des sources émettant des radiations lumineuses, de préférence dans le domaine de l'UV entre 200 et 400 nm, à des vitesses comprises entre 5 et 500 m/min.

De préférence, dans le second mode de réalisation, l'agent antimicrobien est incorporé dans la masse d'un film plastique, de préférence de PVC plastifié, préparé par enduction (procédé coulé ci-dessus décrit) et de préférence présentant un allongement à la rupture supérieur à 100%. La méthode de fabrication consiste alors à incorporer l'agent antimicrobien dans la formulation de polymère constitutif du dit film, notamment de PVC, laquelle est ensuite séchée pour obtenir le film. L'agent antimicrobien étant directement intégré dans la masse du plastique, le film ne comporte pas de couche de vernis superficielle.

Plus particulièrement dans le second mode de réalisation, une formulation de PVC coulé se compose de la manière suivante :
- une poudre de polychlorure de vinyle,
- des plastifiants,
- des solvants,
- des additifs,
- l'agent antimicrobien, de préférence le triclosan.

La poudre de PVC est mélangée aux autres composés de manière à former une pâte fluide. Cette pâte peut être enduite sur un support anti-adhérant, tel qu'un support siliconé, de la même manière qu'une enduction de colle. L'ensemble passe dans un four pour évaporer les solvants et former le film. Une fois cette opération terminée, le film repasse dans la même machine pour être enduit d'adhésif et contrecollé sur un liner comme décrit ci-après. Lorsque la production est terminée, le support anti-adhérant ayant servi de support à la pâte PVC est retiré.

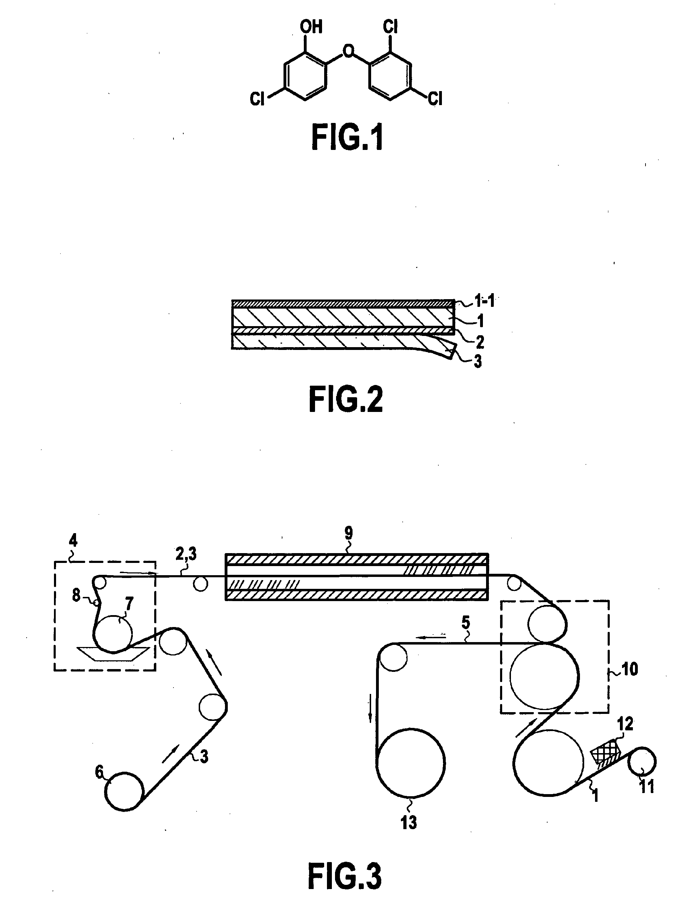

De préférence, la molécule antimicrobienne est le triclosan dont la formule est représentée sur la figure 1, également connue sous le nom de 5-chloro-2-(2,4-dichlorophenoxy) phénol ou 2,4,4'-t-richloro-2'-hydroxydiphenyl éther. Elle se présente sous la forme d'une poudre blanche comprenant une fonctionnalité phénol et éther.

Le triclosan a une activité contre la plupart des bactéries de type Gram+ et Gram-. Il agit sur leur membrane cytoplasmique en empêchant leur synthèse et donc la reproduction des bactéries. Plus généralement, le triclosan s'attaque à une enzyme présente dans beaucoup de microbes, l'enoyl-ACP réductase, ce qui les empêche d'assimiler certains corps gras, indispensables à leur survie. Il est bactériostatique à faible concentration et bactéricide à haute concentration. Pseudomonas aeruginosa n'est pas affecté et le Staphylocoque doré résistant à la pénicilline est simplement inhibé. Il a même été montré récemment que le produit était très efficace dans la lutte contre le paludisme. Il est utilisé dans une grande variété de produits- domestiques cosmétiques et détergents voire dans les produits appliqués sur la peau ou non cités ci-dessus.

De préférence, ledit adhésif est un adhésif sensible à la pression et de préférence enlevable.

On entend ici par :
- « sensible à la pression », un adhésif n'atteignant ses propriétés adhésives définitives qu'après avoir été pressé sur la surface d'application; et
- « enlevable », un adhésif ayant une liaison plus forte pour le film plastique que pour la surface de l'objet et pelable sur ladite surface de l'objet, notamment pelable par une force de pelage inférieure à 10 N/inch (400 N/m), de préférence inférieure à 5 N/inch (inférieure à 200 N/m), de telle sorte que le film puisse être retiré sans utilisation de matériel de décapage.

Les propriétés adhésives, c'est-à-dire la capacité de l'adhésif à créer une liaison par interaction entre son support (à savoir le film plastique) et la surface de l'objet à coller se caractérisent par trois grandeurs : la mouillabilité, le pelage et l'accroche instantanée ou « tack ».

La mouillabilité représente la capacité d'étalement de l'adhésif déposé sur le film avec la surface de l'objet à coller. La mouillabilité doit être la plus forte possible pour que le contact entre la surface à coller et l'adhésif soit le plus important.

Le pelage représente la capacité de l'adhésif à adhérer donc rester sur la surface de l'objet et du film plastique après avoir été pressé convenablement. Le pelage est par exemple déterminé selon la norme ASTM D-1000-78 qui consiste à mesurer la force (en N/inch) nécessaire pour arracher un ruban adhésif d'un support normé. Plus cette force sera importante, plus l'adhésif accrochera au support (elle dépend, entre autres, de la quantité et de la nature d'adhésif déposé en g/m²). Si une partie de l'adhésif reste sur la surface à coller après avoir été retiré, on parle de rupture cohésive ou de transfert d'adhésif ce qui généralement n'est pas désiré. Il peut donc être avantageux de mettre en oeuvre un adhésif temporaire pour pouvoir renouveler la protection antimicrobienne quand tout l'agent antimicrobien est épuisé.

Le « tack » représente l'accroche instantanée sur le support. Il est mesuré à l'aide d'une méthode normée similaire à la précédente, par exemple l'ASTM D 907-82 (1985). Elle mesure toujours une force en N/inch qui doit être assez forte pour que l'adhésif ait une accroche immédiate au support. La méthode de mesure consiste à mettre en contact un film adhésif avec une surface en verre de la même largeur que le film. Généralement la surface de contact entre le film et le verre est de 1 inch², soit 6,5.10⁻³ m². Il s'agit ensuite de retirer immédiatement ce film à l'aide d'un dynamomètre en mesurant la force nécessaire au décollement.

Les adhésifs sensibles à la pression permanents et enlevables sont connus (Handbook of pressure sensitive adhesive, Ed. D. Satas, Van Nostran Neinhold, New York 2^{nd} Ed (1989)). Il s'agit principalement d'élastomères présentant des propriétés adhésives. Pour être enduit sur le film plastique, l'adhésif doit se présenter sous forme fluide. Les différents moyens suivants sont utilisés pour transformer l'élastomère collant en produit fluide applicable :
- une solubilisation de l'élastomère dans un solvant. On parle alors d'adhésifs en phase solvants. Il s'agit des produits les plus employés.
- une dispersion de l'élastomère dans l'eau grâce à l'addition d'agents tensioactifs. On parle alors d'adhésifs en phase aqueuse. L'agent tensioactif n'étant pas éliminé lors de l'enduction, il reste dans l'adhésif et provoque une sensibilité à l'humidité souvent indésirable.
- une liquéfaction de l'élastomère à haute température pour des adhésifs dits « hotmelt » ou calandrables. Ce type de produits nécessite des systèmes d'enduction spécifiques et plus coûteux.
- une fonctionnalisation et une solubilisation de l'élastomère dans des monomères réactifs dans le cas d'adhésifs réticulables UV. Il s'agit d'une technologie encore plus coûteuse.

On entend ici par élastomère, un polymère «élastique» qui supporte de très grandes déformations (supérieures à 100%), lesquelles sont, au moins en partie, réversibles.

Les élastomères sont classés en trois catégories : les caoutchoucs naturels, les caoutchoucs synthétiques et les polyacrylates. Les caoutchoucs, qu'ils soient naturels ou synthétiques ont l'avantage de présenter une accroche immédiate importante, mais ils s'oxydent facilement, ce qui conduit à une diminution de leur pouvoir adhésif dans le temps. Des exemples de caoutchoucs synthétiques sont les copolymères Styrène/Butadiène/Styrène (SBS) et Styrènes/Isoprène / Styrène (SIS). Les élastomères polyacrylates ont une accroche immédiate plus faible, mais leur adhésion est importante et reste stable, voir augmente dans le temps.

Plus particulièrement, l'adhésif représente un grammage sur le film plastique de 10 à 150 g/m², de préférence de 20 à 50 g/m².

La présente invention a également pour objet un film auto adhésif antimicrobien comprenant un dit film plastique revêtu d'un adhésif, ledit film étant souple et étirable manuellement pour être apte à suivre le contour d'une surface non plane, ledit film incorporant un agent antimicrobien au moins à la surface externe du dit film tel que défini ci-dessus.

Plus particulièrement, un film auto adhésif antimicrobien selon l'invention comprenant un dit film plastique présentant une épaisseur de 10 à 500 µm, et/ou un grammage de 10 à 1 000 g/m², revêtu d'une couche d'adhésif de 1 à 150 g/m², présentant une teneur pondérale en agent antimicrobien de 0,01 à 10%, de préférence 0,1 à 5%, par rapport au poids total du film (y compris, le cas échéant, le vernis) et/ou un agent microbien de masse surfacique de 0,01 à 100 g/m², de préférence 0,05 à 10 g/m², le cas échéant, avec une dite couche de vernis de 5 à 50 µm et/ou de masse surfacique de 1 à 100 g/m², de préférence de 5 à 50 g/m².

La présente invention a également pour objet un complexe multicouche comprenant un film auto adhésif antimicrobien selon l'invention, la face revêtue d'adhésif du dit film étant appliquée sur un liner de protection temporaire comprenant une couche de papier ou un second film non adhésif, ledit liner ayant, de préférence, une masse surfacique de 50 à 200 g/m².

De préférence, en effet, ledit film plastique auto-adhésif se présente avant sa mise en oeuvre dans une méthode de protection selon l'invention sous forme d'un dit complexe multicouche tel que représenté sur la figure 2, la face revêtue d'adhésif du dit film étant appliquée sur une couche de papier ou un second film non collant, dont la surface peut être lisse, embossée ou structurée généralement dénommé « liner », lequel liner est protecteur de l'adhésif.

Le liner, appelé plus couramment « liner antiadhésif» (« release liner »), est un second film non collant ou de préférence une feuille de papier revêtue d'une couche antiadhésive, notamment une couche de polymère tel que polysiloxane ou polymère fluoré destiné à recouvrir et donc protéger la couche d'adhésif à la surface du dit film plastique avant son application. Bien qu'il soit séparé du film plastique antimicrobien après la pose, la qualité du liner influence la qualité du film antimicrobien collé. Par exemple l'emploi d'un liner structuré facilite la pose du film, réduit le nombre de bulles créées entre le film et l'objet et améliore ainsi la qualité de surface du film antimicrobien posé. De même, un liner dont le dos à une structure rugueuse transfère par pression sa rugosité à la surface du film antimicrobien lors de son enroulement, modifiant ainsi ses propriétés de surface. Le liner est sélectionné en tenant compte des paramètres suivants :

L'effet de non adhérence (« release »), c'est-à-dire non collant, doit être adapté à la nature de l'adhésif du film antimicrobien. Une valeur de force de décollement (« release ») trop élevée complique le décollement du film antimicrobien auto adhésif. Si elle est trop faible, le film risque de tomber. D'une manière générale, la valeur de la force de décollement doit être comprise entre 0,5 et 2 N/inch (entre 20 et 80 N/m), de préférence de 0,8 à 1,2 N/inch (de 30 à 50 N/m). L'effet de décollement est apporté par une couche anti adhérente de polysiloxane, le liner étant alors dénommé papier siliconé, ou plus rarement d'un polymère fluoré. La couche anti adhésive a en général une épaisseur inférieure à 2 micromètres.

Le corps du liner apporte la stabilité dimensionnelle au film autoadhésif antimicrobien avant usage. Sa qualité de surface est importante car sa structure va s'imprimer par pression sur le film autoadhésif antimicrobien lors de l'enroulement de la bobine. Il existe différents corps de liner qui sont :
- des papiers kraft et glassine calandrés qui représentent la grande majorité des liners disponibles. Ils sont utilisés dans la plupart des applications. Leur défaut principal est un état de surface de type papier qui peut marquer la surface du média. De plus leur sensibilité à l'humidité peut provoquer des gondolements du papier. Pour diminuer cet effet, certains papiers pour liner sont revêtus d'une couche comprenant des particules d'argile, on parle alors de « clay coated papers ».
- des papiers revêtus d'une couche de polyéthylène sur une ou les deux faces (PE/papier/PE). Il s'agit d'un complexe ayant pour but de diminuer la sensibilité du liner à l'eau. La présence du PE en dorsale du papier améliore également la glissance des films et facilitent leur enroulement. Une couche anti adhérente du type polysiloxane du coté de la couche d'adhésif du film plastique reste toutefois requise.
- des films polyesters ou plus précisément des PET peuvent être utilisés pour protéger les films auto adhésifs antimicrobien nécessitant une parfaite transparence, par exemple pour des films destinés à la protection antimicrobienne de vitrages.

Le liner anti adhésif de protection représente (y compris sa couche anti-adhérente) un grammage de 50 à 200 g/m², de préférence de 80 à 150 g/m².

Le film plastique auto adhésif antimicrobien selon l'invention et le liner antiadhésif sont conditionnés sous la forme de bobines de longueurs enroulées de 1 à 5 000 m et de largeur de 615 à 2 000 mm.

L'application de l'adhésif sur le film plastique antimicrobien se fait par enduction consistant à déposer la couche d'adhésif avec une épaisseur contrôlée sur le film avant de la protéger avec le liner. On distingue en général deux modes de production connus:
- l'enduction directe : l'adhésif est directement déposé sur le film à adhésiver puis séché. C'est la méthode la plus simple à mettre en oeuvre.
- L'enduction par transfert : la méthode précédente présente des risques sur des films à sensibilité thermique trop importante, comme le PVC. L'étape de séchage de l'adhésif, postérieur à l'enduction, serait susceptible de déformer le film. Dans ce cas, on préfère une enduction par transfert, ou contre-collage, comme représenté sur la figure 3. L'adhésif est d'abord enduit sur le liner anti adhésif, séché, puis contrecollé sur le film, tel que film en PVC, dans une station de lamination placée en fin de ligne de production.

Dans un mode de réalisation particulier d'une méthode de protection antimicrobienne d'une grande surface d'un objet, on réalise les étapes suivantes, dans lesquelles :
1/ on dépose, sur la surface de l'objet à protéger, un complexe selon l'invention, comprenant un film autoadhésif dont la face interne revêtue d'adhésif est appliquée sur un liner de protection temporaire, de manière à découper le complexe grossièrement, c'est-à-dire à des dimensions quelque peu supérieures aux dimensions exactes de la surface de l'objet à protéger; et
2/ on retire une partie du liner pour dégager une partie de la face revêtue d'adhésif du film autoadhésif, ladite partie formant, par exemple, une bande; puis
3/ on colle ladite bande de film autoadhésif en exerçant une pression sur la face externe dudit film contre la surface à protéger, de manière à ce que l'adhésif adhère sur ladite surface de l'objet et que le film en épouse complètement les contours, éventuellement non plans; et
4/ le cas échéant, on tire, simultanément à l'étape 3/, sur l'extrémité libre du complexe, la partie du liner retirée étant située entre la surface à protéger et la partie restante du complexe; et
5/ le cas échéant, notamment pour que le film autoadhésif dégagé du liner épouse bien les parties non planes de la surface à protéger, de préférence on exerce.la pression sur la face externe du film à l'aide d'une raclette que l'on déplace pour coller le film en chassant l'air et évitant ainsi la formation de bulle entre le film à coller et la surface de l'objet à protéger par ledit film; et
6/ on répète les étapes 2/ à 5/ jusqu'à ce que la surface de l'objet à protéger soit entièrement revêtue du film autoadhésif collé sur ladite surface; et
7/ on découpe le film aux dimensions exactes de ladite surface à protéger, après que la surface de l'objet à protéger soit entièrement revêtue du film autoadhésif collé sur ladite surface.

Pour des petites surfaces, on peut enlever entièrement le liner à l'étape 2/ et, aux étapes 3/ et suivantes, encoller tout d'abord une partie seulement du film autoadhésif sur une partie de la surface à protéger; pour appliquer ensuite le reste du film progressivement, le cas échéant à l'aide d'une raclette, comme explicité ci-dessus.

Avantageusement, notamment dans le cas de grandes- surfaces, il est possible de retirer complètement le liner et de mouiller la face interne revêtue d'adhésif du film autoadhésif, de manière à pouvoir la laisser reposer sur la surface à protéger sans qu'elle y adhère avant qu'une pression ait été exercée, notamment à l'aide d'une raclette comme explicité ci-dessus.

D'autres caractéristiques et avantages de l'invention apparaîtront à la lumière des exemples de réalisation qui vont suivre.

La figure 1 représente la formule du triclosan.

Sur la figure 2, on a représenté schématiquement un complexe multicouche selon l'invention, comprenant : liner 3/ adhésif 2/ film plastique antimicrobien 1 revêtu éventuellement d'un vernis 1-1.

Sur la figure 3, on a représenté schématiquement une installation d'enduction par transfert permettant d'enduire l'adhésif sur un film antimicrobien par transfert à partir d'un liner.

Les figures 4-1 à 4-7 représentent des coupelles contenant des milieux de culture de bactéries et les échantillons sous forme de disques de film autoadhésifs revêtus d'un vernis antimicrobien des exemples 1 à 7 respectivement.

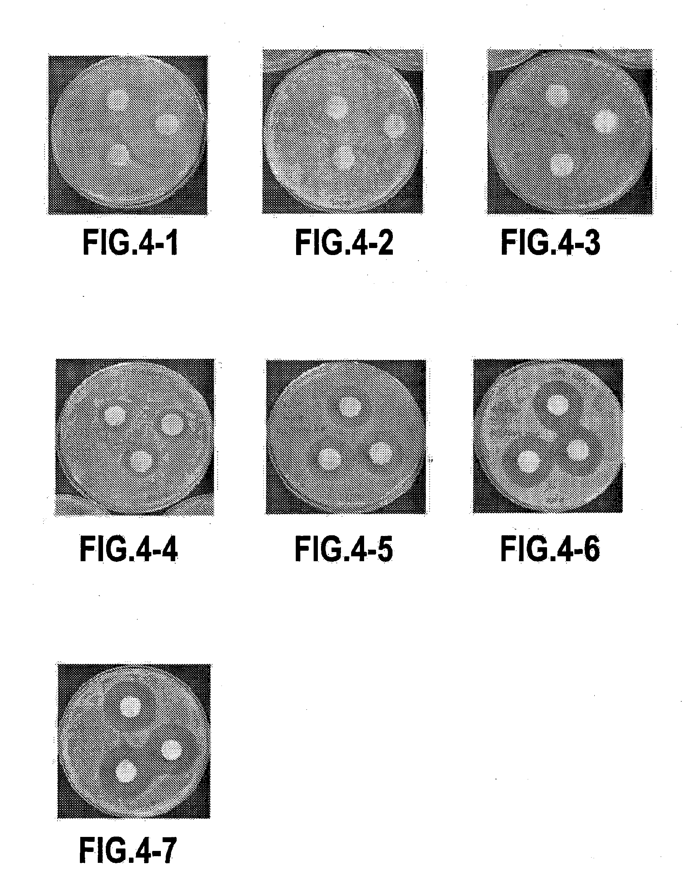

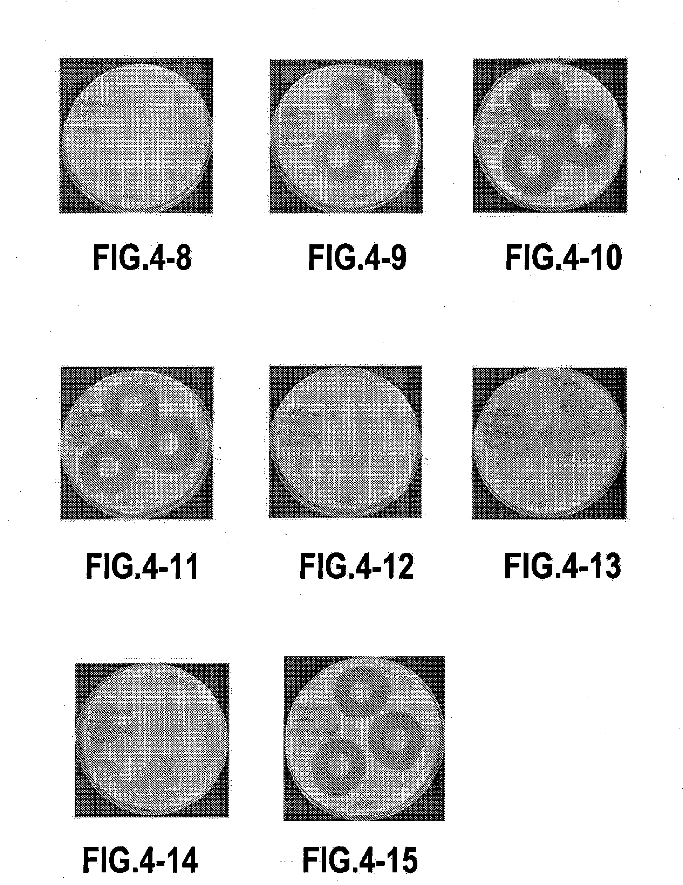

Les figures 4-8 à 4-15 représentent des coupelles contenant des milieux de culture de bactéries et les échantillons sous forme de disques de film autoadhésifs incorporant dans la masse un agent antimicrobien des exemples 8 à 15 respectivement.

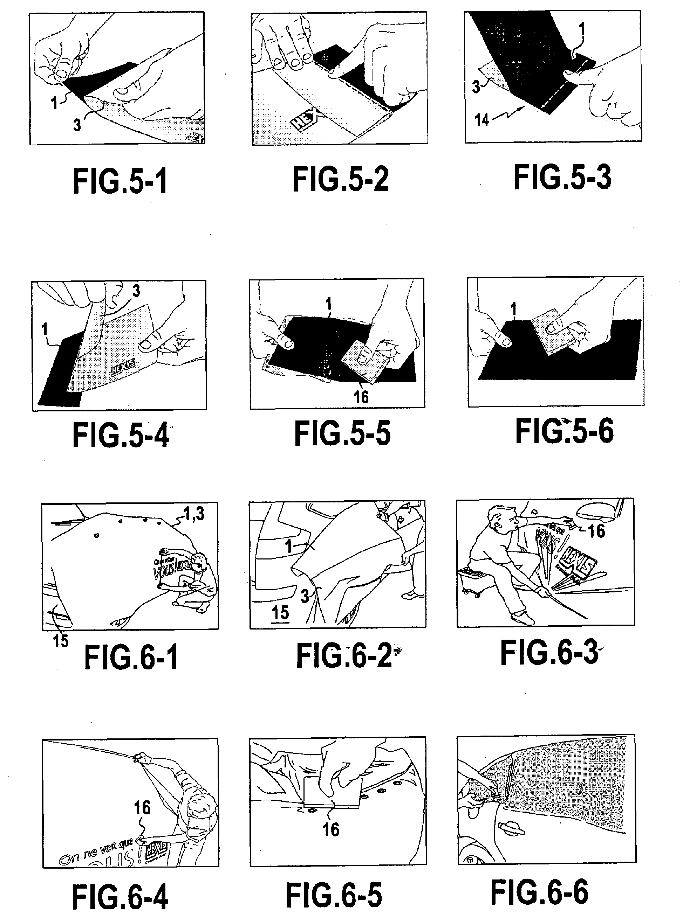

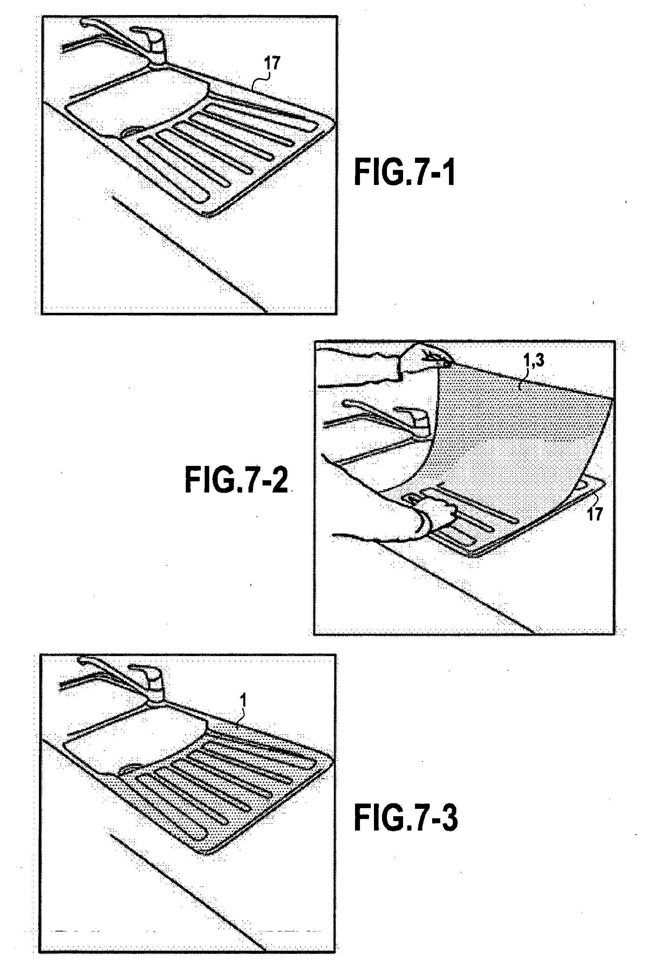

Les figures 5-1 à 5-6 représentent l'application d'un film auto adhésif selon l'invention sur une surface plane, et les figures 6-1 à 6-6 et 7-1 à 7-3, l'application d'un film selon l'invention sur des surfaces non planes, telles qu'une carrosserie d'automobile (figures 6-1 à 6-6) ou un égouttoir d'évier (figures 7-1 à 7-3).

### 1. Méthode de fabrication d'un film PVC autoadhésif antimicrobien

### 1.1. Préparation d'un vernis antimicrobien

### 1.1.1. Vernis 1 des exemples 1 à 5

5 parts par poids d'un photoamorceur solide tel que la benzophénone, sont solubilisés dans 34 parts par poids du monomère réactif difonctionnel dipropylène glycol diacrylate. Après dissolution complète de la benzophénone, 10 parts par poids d'un coamorceur de type amine tertiaire tel que le Craynor CN-371 fourni par la société Sartomer sont ajoutés au mélange précédent. Sont ensuite ajoutés 50 parts par poids d'un oligomère uréthane diacrylate fourni par Sartomer sous le nom de Craynor CN-981, 1 part par poids d'un agent mouillant tel que le polymère siliconé Tego Wet 500 fourni par la société Degussa. L'agent antimicrobien sera ensuite ajouté au mélange précédent jusqu'à sa complète dissolution. L'ensemble est mélangé et. chauffé à une température de 40°C jusqu'à obtention d'un mélange fluide et parfaitement transparent.

### 1.1.2..Vernis 2 de l'exemple 6

3 parts par poids d'un photoamorceur solide type hydroxyphényl cétone tel que l'Irgacure 184 fourni par la société CIBA sont ajoutés à 0,5 parts par poids d'un autre photoamorceur solide type oxyde de phosphine tel que le Darocur TPO également fourni par la société CIBA. Ces deux photoamorceurs sont dissous dans 39 parts par poids d'un monomère acrylate monofonctionnel tel que l'Ebecryl IBOA fourni par la société Cytec. Sont ensuite ajoutés 57 parts par poids d'un oligomère polyester acrylate tel que celui fourni par Sartomer sous le nom de Craynor UVP-210 et 0,5 parts par poids d'un agent mouillant non siliconé tel que le Modaflow 9200 fourni par la société Cytec. L'agent antimicrobien sera ensuite ajouté au mélange précédent jusqu'à sa complète dissolution. L'ensemble est mélangé et chauffé à une température de 40°C jusqu'à obtention d'un mélange fluide et parfaitement transparent.

### 1.1.3. Vernis 3 de l'exemple 7

Il s'agit du vernis 2 auquel on ajoute 0,5 parts par poids d'un agent glissant de surface fourni par la société Degussa sous le nom de Tego Rad 2300.

On ajoute un agent antimicrobien en mélange dans le vernis liquide, à raison d'une teneur pondérale en agent antimicrobien de 1 ou 2% dans le vernis, de manière à obtenir des films autoadhésifs dont le vernis, après application, contient 1 ou, respectivement, 2% en poids d'agent antimicrobien, comme spécifié dans le descriptif des produits des exemples 1 à 7 ci-après.

### 1.2. Enduction du vernis sur un film plastique PVC.

Les radiations lumineuses utilisées pour sécher le vernis ont pour effet secondaire de provoquer un échauffement important de la bande de PVC. La tension alors exercée par la machine sur le film risque de l'étirer de manière incontrôlée et de le casser. Ce risque est éliminé si le film PVC a préalablement été adhésivé sur un liner dont la stabilité thermique est suffisante pour ne pas être déformé sous l'action conjointe de la chaleur et de la tension. C'est pourquoi on choisit un liner papier/PE dont la densité est comprise entre 50 et 200 g/m², de préférence une densité comprise entre 80 et 150 g/m².

Les vernis sont déposés sur un film PVC plastifié blanc calandré d'une épaisseur de 80 µm et 115 g/m² présentant un allongement à la rupture de 120% et une résistance à la traction de 40 N/inch (1 575 N/m). Ce film PVC comprend 30% d'un plastifiant polymère constitué par un polyadipate de butanediol.

Le film PVC a été revêtu d'une couche de 30 g/m² d'un adhésif acrylique sensible à la pression à base solvant. Cet adhésif est disponible commercialement sous le nom de Gelva Multipolymer Solution 2775 auprès de la société Monsanto. Le dit adhésif est contrecollé sur un liner papier PE de marque Poly Slik disponible commercialement auprès de la société Loparex dont le grammage est de 145 g/m² tel que décrit ci-après (paragraphe 1.4.).

Les vernis sont déposés à des épaisseurs inférieures à 20 µm correspondant à 22 g/m² sur le film PVC et séchés sous des lampes UV Fusion VPS600 à une vitesse de 10 m/min. Le dépôt du vernis se fait à l'aide d'une barre Mayer selon le même procédé que celui décrit pour l'enduction de l'adhésif. L'allongement à la rupture du film autoadhésif revêtu du vernis mesuré dans les conditions standard de la norme NF X 41-025 est supérieur à 50% et sa résistance à la rupture est de 39 N/inch.

### 1.3. Fabrication d'un film PVC incorporant un agent antimicrobien dans sa masse

Un PVC coulé transparent est préparé à partir du mélange suivant :
- 40 parts en poids d'une coupe de distillation de solvants aromatiques légers tels que le Hi-Sol 10 (aromatiques C8 à C10) sont obtenus auprès de la société Ashland Chemical. Ils sont mélangés à 13 parts en poids d'une fraction lourde hydrotraitée (C6 à C13) de distillat de pétrole obtenue auprès de la société Exxon Mobil sous le nom d'Isopar G.
- 4 parts en poids d'un absorbeur UV de type hydroxy-benzophénone fourni par la société Great Lakes Chemical Corporation sous le nom de lowilite 22, 6 parts en poids d'un stabilisant thermique à base de baryum/zinc disponible auprès de la société Crompton (Chemtura corp.) sous le nom de Mark 4718 et 8 parts en poids de plastifiant G-59 qui est un polyadipate de glycol fourni par la société C.P. Hall Corp. sont dissous dans le mélange de solvants.
- 100 parts en poids d'une poudre de polychlorure de vinyle Solvin 380 NS obtenu auprès de la société Solvay sont dispersés dans le mélange précédent sous agitation vigoureuse jusqu'à ce qu'aucune particule solide ne soit plus visible dans le mélange.
- Enfin, 1,2, 2,4 ou 3,7 parts en poids d'agents microbiens sont ajoutés au mélange, pour obtenir une teneur pondérale d'extrait sec de 1,2 ou respectivement 3% en agents antimicrobiens incorporés dans la masse du film PVC, comme mentionné dans le descriptif des exemples 8 à 15 ci-après. Le film PVC obtenu comprend alors 6,6% en poids de dit plastifiant polymère.

La formulation est déposée sur une dorsale en PET recouverte d'un traitement anti-adhérent. Cette dorsale est disponible commercialement sous le nom de Mylar 834 auprès de la société Dupont Teijin Films. L'enduction se fait à la barre Mayer comme explicité sur la figure 3 dans le paragraphe 1.4. pour l'enduction de l'adhésif. Le dépôt est réalisé de manière à obtenir un film d'une épaisseur finale de 50 µm et 68 g/m². La vitesse de la ligne d'enduction est alors de 10 m/min. Le film passe dans un four dont la température est fixée à 200°C de manière à évaporer la totalité des solvants et à obtenir un film parfaitement lisse et homogène. Il est ensuite refroidi avant d'être enroulé sous la forme d'une bobine de 2 000 m linéaires.

### 1.4. Enduction de l'adhésif sur le film et fabrication d'un complexe liner / film auto adhésif antimicrobien.

Il existe un grand nombre de méthodes d'enduction connues. Elles sont communes à toutes les industries habituées à déposer des couches sur des surfaces planes. On peut citer l'enduction à lame d'air, au couteau sur cylindre, au couteau flottant, cylindre sur cylindre, 3 ou quatre cylindres en direct ou reverse, la barre Mayer, la barre coma ou des méthodes habituellement utilisées par les imprimeurs telles que la flexographie, l'héliographie, etc. On préfère l'enduction à la barre coma et à la barre Mayer. L'enduction à la barre Mayer est illustrée sur la figure 3.

Une tête d'enduction à la barre Mayer 4 est composée d'une tige filetée 8 placée en aval d'un cylindre-enducteur 7. L'épaisseur du filetage et la tension exercée sur le liner 3 permettent d'ajuster l'épaisseur de colle 2 déposée, soit 30 g/m².

Une-fois enduit de la colle 2, le liner 3 passe dans un four 9 dont la température est comprise entre 40 et 120°C. Plus précisément, le four est divisé en quatre compartiments dont les températures sont respectivement de 50, 60, 90 et 120°C. L'opération a pour objectif d'évaporer les solvants de la colle 2. C'est à sa sortie qu'à lieu le contre-collage dans une station de lamination 10 plaquant le liner 3 revêtu de l'adhésif contre le film PVC 1 pour former un complexe multicouche 5. Le film PVC 1 déroulé 11 à proximité, aura au préalable subit un traitement de surface de type corona, flamme ou plasma 12 pour améliorer l'accroche de l'adhésif à sa surface.

Après la lamination 10 du liner adhésivé avec film PVC, le produit fini 5 (complexe liner + film auto adhésif antimicrobien) encore chaud est refroidi pour être ramené à température ambiante et éviter toute contraction postérieure. Il est ensuite enroulé 13 sous la forme d'une bobine de 2 000 m puis découpé à la demande.

Le liner 3 (Loparex Poly Slik) présente un grammage de 145 g/m2, et l'adhésif 2 un grammage de 30 g/m2. L'ensemble des opérations d'enduction et de lamination se fait à une vitesse de 20 m/min.

### 2. Propriété antimicrobienne de films recouverts d'un vernis antimicrobien.

Les exemples ci-dessous sont des films auto adhésifs revêtus d'un vernis à propriétés antimicrobiennes. Les vernis ont des compositions telles que mentionnées au paragraphe 1.1 ci-dessus et sont déposés sur un film PVC blanc calandré d'une épaisseur de 80 µm tel que décrit au paragraphe 1.2 ci-dessus. Le film est revêtu d'un adhésif acrylique base solvant d'une épaisseur de 25 µm par contre collage sur un liner papier revêtu d'une couche de PE et de polysiloxane et dont le grammage est de 145 g/m² tel que décrit au paragraphe 1.4 ci-dessus.

L'activité antimicrobienne des films est déterminée par la méthode dite de la zone d'inhibition, proche de celle décrite dans la norme japonaise JIS L 1902 : 2002. Le film est découpé sous la forme de petits disques de 1 cm de diamètre. Ils sont plongés dans une coupelle contenant un milieu nutritif et une quantité connue de bactéries Staphilococcus aureus de couleur jaune. Après 24 heures d'incubation, les bactéries colonisent l'ensemble de la coupelle hormis la proximité des échantillons traités par le vernis antimicrobien dont elles n'arrivent pas à s'approcher. Il se forme un halo de protection autour des échantillons traité qui est appelé zone d'inhibition, comme représenté sur les figures 4-1 à 4-15 représentant les résultats des films antimicrobiens des exemples 1 à 15. C'est en mesurant l'épaisseur de ce halo que l'on détermine l'intensité de l'activité antimicrobienne du film.

Exemple 1 : PVC blanc mat polymérique (c'est-à-dire comprenant un plastifiant polymérique), adhésivé avec un adhésif acrylique déposé sur un liner papier PE. Produit témoin non vernis. Aire d'inhibition : 0 mm.

Exemple 2 : PVC blanc mat polymérique adhésivé avec un adhésif acrylique déposé sur un liner papier PE. Vernis 1 du paragraphe 1.1. contenant 1% en poids d'antimicrobien Irgaguard H6000 (sel d'argent). Aire d'inhibition : 0 mm.

Exemple 3 : PVC blanc mat polymérique adhésivé avec un adhésif acrylique déposé sur un liner papier PE. Vernis 1 du paragraphe 1.1. contenant 1% en poids d'antimicrobien Parmetol CF10 (mélange de pyrithione de zinc et de terbutryne). Aire d'inhibition : 0 mm.

Exemple 4 : PVC blanc mat polymérique adhésivé avec un adhésif acrylique déposé sur un liner papier PE. Vernis 1 du paragraphe 1.1. contenant 1% en poids d'antimicrobien Irgaguard B1000 (triclosan). Aire d'inhibition : 3 mm.

Exemple 5 : PVC blanc mat polymérique adhésivé avec un adhésif acrylique déposé sur un liner papier PE. Vernis 1 du paragraphe 1.1. contenant 2% en poids d'antimicrobien Irgaguard B1000 (triclosan). Aire d'inhibition : 7 mm.

Exemple 6 : PVC blanc mat polymérique adhésivé avec un adhésif acrylique déposé sur un liner papier PE. Vernis 2 du paragraphe 1.1. contenant 2% en poids d'antimicrobien Irgaguard B1000 (triclosan). Aire d'inhibition : 8 mm.

Exemple 7 : PVC blanc mat polymérique adhésivé avec un adhésif acrylique déposé sur un liner papier PE. Vernis 3 du paragraphe 1.1. contenant 2% en poids d'antimicrobien Irgaguard B1000 (triclosan). Aire d'inhibition : 9 mm.

On note une influence de la nature des vernis sur les propriétés antimicrobiennes des films. A même concentration en triclosan, les vernis 2 et 3 (polyesters) montrent une activité antimicrobienne supérieure au vernis 1 (polyuréthane).

D'autre part, le triclosan (Irgaguard B1000) apparaît plus efficace que le Parmetol CF10 et Irgaguard H6000.

D'autres vernis et autres agents antimicrobiens ont été testés comme mentionnés précédemment.

### 3. Propriété de films auto adhésifs incorporant un agent antimicrobien dans la masse.

Les échantillons testés dans les exemples 8 à 15 sont des PVC coulés transparents adhésivés par un adhésif acrylique base solvant de 25 µm d'épaisseur. Ils sont contrecollés sur un liner papier PE d'une densité de 145 g/m². Leur allongement à la rupture mesuré dans les conditions standard de la norme NF X 41-025 est supérieur 100%.

Il s'agit- de PVC coulés obtenus selon la méthode par enduction décrite-précédemment au paragraphe 1.3 et adhésivés comme décrit en 1.4.

Ces exemples mettent à nouveau en évidence que parmi les molécules antimicrobiennes testées, le triclosan montre une activité antimicrobienne dans un film la plus élevée qui puisse être mesurable selon une norme proche de JIS L 1902 : 2002. La comparaison entre les exemples 9 et 15 montre que l'épaisseur du film n'a pas une corrélation directe avec l'efficacité antimicrobienne; c'est plus la concentration de l'agent antibactérien dans le film que son grammage total qui est corrélée à son efficacité. Toutefois, le grammage total a un effet quant à la durée de l'efficacité antimicrobienne pour un film donné.

Exemple 8 : PVC coulé transparent d'une épaisseur de 65 µm. Il ne contient aucun agent antimicrobien. Aire d'inhibition : 0 mm.

Exemple 9 : PVC coulé transparent d'une épaisseur de 60 µm. Il contient 1% en poids d'Irgaguard B1000 (triclosan). Son aire d'inhibition est de 9 mm.

Exemple 10 : PVC coulé transparent d'une épaisseur de 60 µm. Il contient 2% en poids d'Irgaguard B1000 (triclosan). Son aire d'inhibition est de 11 mm.

Exemple 11 : PVC coulé transparent d'une épaisseur de 64 µm. Il contient 3% en poids d'Irgaguard B1000 (triclosan). Son aire d'inhibition est de 11 mm.

Exemple 12 : PVC coulé transparent d'une épaisseur de 52 µm. Il contient 2% en poids d'Irgaguard H6000 (sel d'argent). Son aire d'inhibition est de 0 mm.

Exemple 13 : PVC coulé transparent d'une épaisseur de 65 µm. Il contient 2% en poids d'Irgarol 1051 (N'-WHUW-butyl-N-cyclopropyl-6-(methylthio)-1,3,5-triazine-2,4-diamine). Son aire d'inhibition est de 0 mm.

Exemple 14 : PVC coulé transparent d'une épaisseur de 65 µm. Il contient 2% en poids de Parmetol CF 10 (mélange de pyrithione de zinc et de terbutryne) Son aire d'inhibition est de 0 mm.

Exemple 15 : PVC coulé transparent d'une épaisseur de 30 µm. Il contient 1% en poids d'Irgaguard B1000 (triclosan) Son aire d'inhibition est de 9 mm.

La comparaison des différents exemples montre la supériorité du triclosan sur les autres agents antimicrobiens testés.

### 4. Exemples de protection d'objet

4.1. La protection d'un objet dont la surface est plane est représentée sur les figures 5-1 à 5-6. Un film de PVC antimicrobien 1 est déposé sur une surface 14. Dans un premier temps (figure 5-1), une partie du liner 3 est retirée du film PVC 1 sur une bande de quelques centimètres. La partie de liner ainsi dégagée est ensuite pliée sur toute sa largeur (figure 5-2) de manière à ne laisser que ladite bande de film à découvert: Cette bande est déposée (figure 5-3) sur la surface à protéger 14 en exerçant une pression sur la face externe du film PVC à coller, de manière à ce que l'adhésif adhère complètement sur ladite surface. Le Liner 3 est ensuite progressivement retiré en tirant sur la partie de liner décollée, celle-ci étant placée entre le film et la surface de l'objet non encore protégée. Puis, on applique la partie de film autoadhésif ainsi dégagée du liner contre la surface à protéger, comme explicité ci-après. On exerce une pression sur le film PVC à coller en le plaquant contre la surface à protéger avec une raclette 16 et en déplaçant la raclette par-dessus le film, sur sa face externe, depuis la partie collée vers la partie non encore collée du film, de manière à chasser l'air pour éviter la formation de bulles d'air entre le film et la surface à protéger (figure 5-5 et 5-6).

4.2. La protection d'un objet 15 à surface courbée spécialement complexe est représentée sur les figures 6-1 à 6-6. L'objet 15 en question est une carrosserie d'un véhicule roulant. Le film PVC 1 et son liner 3 sont déposés sur l'objet à protéger de manière à prendre ses dimensions exactes (figure 6-1). Il est grossièrement découpé, progressivement retiré de son liner et appliqué sur l'objet 15 de la même manière que décrite sur la figure 5 en collant une bande de quelques centimètres de PVC (figure 6-2). L'enrobage des surfaces légèrement courbes est obtenu en tirant sur l'extrémité libre du film PVC complexé au liner, après avoir retiré une partie du liner, la partie déjà collée supportant l'ensemble du film à l'autre extrémité (figure 6-3). Lorsqu'une partie du film est parfaitement posée, une pression est exercée sur le film pour assurer son adhésion sur la surface courbe (figure 6-4), le cas échéant en tirant simultanément l'extrémité libre du film complexé au liner; l'emploi d'une raclette en plastique mou 16 facilite cette opération (figure 6-4 et 6-5). Enfin, lorsque toute la surface dudit objet est recouverte, le film est découpé plus précisément (figure 6-6).

4.3. La protection d'un objet 17 à surface relativement de petites dimensions est représentée sur les figures 7-1 à 7-3. L'objet 17 en question représente l'égouttoir d'un évier (figure 7-1). Le film PVC 1 est déposé sur l'objet de manière à prendre ses dimensions et découpé de manière grossière. Il est ensuite entièrement retiré de son liner 3 et appliqué sur l'objet 17 de la même manière que décrite sur la figure 5, en collant une bande de quelques centimètres de PVC 1. L'enrobage des surfaces courbes est obtenu en tirant sur le PVC, la partie déjà collée supportant l'ensemble du film (figure 7-2). Lorsqu'une partie du film 1 est parfaitement posée, l'emploi d'une raclette 16 en plastique mou facilite la pose du reste du film, comme explicité précédemment. Le film sera découpé plus précisément après avoir protégé l'ensemble de l'objet 17 (figure 7-3).

## Revendications

1. Méthode de protection antimicrobienne d'une surface plane ou non plane d'un objet matériel, **caractérisée en ce que** l'on applique contre la surface de l'objet, la face dite interne d'un film plastique (1) auto-adhésif revêtue sur sa dite face interne d'une couche d'adhésif (2), ledit film étant constitué de PVC plastifié, ledit PVC plastifié comprenant un plastifiant polymère dans une proportion de 5 à 50% en poids dans ledit film, ledit film étant souple et étirable manuellement et apte à suivre le contour d'une dite surface, présentant un allongement à la rupture supérieur à 50% et une résistance à la traction inférieure à 6 000 N/m, et ledit film incorporant dans sa masse ou comprenant sur sa face dite externe un agent antimicrobien, rendant la surface externe dudit film active contre les microbes.

2. Méthode selon la revendication 1, **caractérisée en ce que** ledit plastifiant polymère étant choisi parmi les polyesters obtenus par réaction d'un diol sur un diacide.

3. Méthode selon l'une des revendications 1 à 2, **caractérisée en ce que** l'agent antimicrobien est incorporé au sein d'un vernis appliqué à la surface externe du film plastique, de préférence dans une teneur pondérale de 0,1 à 10%, de préférence encore 0,5 à 5% par rapport au poids du dit vernis.

4. Méthode selon l'une des revendications 1 à 3, **caractérisée en ce qu'**on incorpore l'agent antimicrobien à un vernis appliqué sur un film en PVC plastifié calandré,

5. Méthode selon la revendication 4, **caractérisée en ce que** ledit PVC plastifié calandré présente un allongement à la rupture inférieur à 200%, de préférence inférieur à 150%, de préférence encore de 50 à 100%.

6. Méthode selon l'une des revendications 1 à 5, **caractérisée en ce que** l'agent antimicrobien est incorporé dans un vernis à base de polymère acrylique, de préférence polyester acrylique polymérisable par réticulation sous radiation lumineuse,

7. Méthode selon l'une des revendications 1 ou 2, **caractérisée en ce que** l'agent antimicrobien est incorporé dans la masse du film plastique, de préférence dans une teneur pondérale de 0,1 à 10%, de préférence encore 0,5 à 5% par rapport au poids du film.

8. Méthode selon la revendication 7, **caractérisée en ce que** l'agent antimicrobien est incorporé dans la masse d'un film plastique de PVC plastifié préparé par enduction (PVC dit coulé) présentant un allongement à la rupture supérieur à 100%.

9. Méthode selon l'une des revendications 1 à 8, **caractérisée en ce que** l'agent antimicrobien est le triclosan.

10. Méthode selon l'une des revendications 1 à 9, **caractérisée en ce que** ledit adhésif est un adhésif sensible à la pression.

11. Méthode selon l'une des revendications 1 à 10, **caractérisée en ce que** ledit adhésif est un adhésif enlevable

12. Méthode selon l'une des revendications 1 à 11, **caractérisée en ce que** ladite surface de l'objet est une surface non plane.

13. Méthode selon l'une des revendications 1 à 12, **caractérisée en ce que** ladite surface de l'objet est en matériau choisi parmi les bois, et matières plastiques rigides, plastiques, minérales ou métalliques.

14. Méthode selon l'une des revendications 1 à 13, **caractérisée en ce que** ledit objet est un objet ménager, un objet d'ameublement ou un objet intérieur d'immeuble, de préférence pour lieux ouverts au public et exposé au risque de contamination par contact avec lesdits objets.

15. Film auto adhésif antimicrobien comprenant un dit film plastique (1) en PVC plastifié revêtu d'un adhésif (2), ledit film étant souple et étirable manuellement apte à suivre le contour d'une surface non plane, ledit film incorporant dans sa masse ou comprenant en surface un dit agent antimicrobien, tel que défini dans l'une des revendications 1 à 13.

16. Film auto adhésif antimicrobien selon la revendication 15, **caractérisé en ce que** ledit film plastique présente une épaisseur de 10 à 500 µm et 10 à 1 000 g/m², revêtu d'une couche d'adhésif de 1 à 150g/m2, présentant une teneur pondérale en agent antimicrobien de 0,01 à 10%, de préférence 0,1 à 5% par rapport au poids total du film, et une masse surfacique de 0,01 à 100 g/m², de préférence de 0,05 à 10 g/m² d'agents antimicrobiens et, le cas échéant, une couche de vernis de 5 à 50 µm et 1 à 100 g/m², de préférence 5 à 50 g/m².

17. Complexe multicouche (5) comprenant un film (1) auto adhésif antimicrobien selon l'une des revendications 15 ou 16, la face revêtue d'adhésif (2) du dit film étant appliquée sur un liner de protection temporaire (3) comprenant une couche de papier ou un second film non adhésif, ledit liner ayant, de préférence, une masse surfacique de 50 à 200g/m2.

## Patentansprüche

1. Verfahren zum Schutz gegen Mikroorganismen einer ebenen oder nicht ebenen Oberfläche eines materiellen Gegenstandes, **dadurch gekennzeichnet, dass** auf die Oberfläche des Gegenstandes die sogenannte Innenseite einer selbstklebenden Kunststofffolie (1), die auf ihrer Innenseite mit einer Klebeschicht (2) überzogen ist, aufgebracht wird, wobei die Folie aus Weich-PVC besteht, wobei das Weich-PVC einen polymeren Weichmacher in einem Anteil von 5 bis 50 Gew.-% in der Folie umfasst, wobei die Folie flexibel und mit der Hand dehnbar ist und geeignet ist, der Kontur einer Oberfläche zu folgen, eine Bruchdehnung von mehr als 50 % sowie eine Zugfestigkeit von weniger als 6000 N/m aufweist, und wobei die Folie ein antimikrobielles Mittel, das die Außenfläche der Folie gegen Mikroorganismen aktiv macht, in ihrer Masse einschließt oder auf ihrer sogenannten Außenseite umfasst.

2. Verfahren nach Anspruch 1, **dadurch gekennzeichnet, dass** der polymere Weichmacher aus den Polyestern, die durch Reaktion eines Diols an einer Disäure erhalten werden, ausgewählt ist.

3. Verfahren nach einem der Ansprüche 1 bis 2, **dadurch gekennzeichnet, dass** das antimikrobielle Mittel in einen Lack, der auf die Außenfläche der Kunststofffolie aufgebracht wird, eingebettet ist, vorzugsweise in einem Gewichtsgehalt von 0,1 bis 10 %, weiterhin vorzugsweise von 0,5 bis 5 %, bezogen auf das Gewicht des Lackes.

4. Verfahren nach einem der Ansprüche 1 bis 3, **dadurch gekennzeichnet, dass** das antimikrobielle Mittel in einen Lack, der auf eine Folie aus kalandriertem Weich-PVC aufgebracht wird, eingebettet wird.

5. Verfahren nach Anspruch 4, **dadurch gekennzeichnet, dass** das kalandrierte Weich-PVC eine Bruchdehnung von weniger als 200 %, vorzugsweise weniger als 150 %, weiterhin bevorzugt von 50 bis 100 % aufweist.

6. Verfahren nach einem der Ansprüche 1 bis 5, **dadurch gekennzeichnet, dass** das antimikrobielle Mittel in einen Lack auf der Basis von Acrylpolymer, vorzugsweise Acrylpolyester, der durch Vernetzen unter Lichtstrahlung polymerisierbar ist, eingebettet ist.

7. Verfahren nach einem der Ansprüche 1 oder 2, **dadurch gekennzeichnet, dass** das antimikrobielle Mittel in die Masse der Kunststofffolie, vorzugsweise in einem Gewichtsgehalt von 0,1 bis 10 %, weiterhin vorzugsweise 0,5 bis 5 %, bezogen auf das Gewicht der Folie, eingebettet ist.

8. Verfahren nach Anspruch 7, **dadurch gekennzeichnet, dass** das antimikrobielle Mittel in die Masse einer durch Bestreichen hergestellten Kunststofffolie aus Weich-PVC (sogenanntem gegossenem PVC) mit einer Bruchdehnung von mehr als 100 % eingebettet ist.

9. Verfahren nach einem der Ansprüche 1 bis 8, **dadurch gekennzeichnet, dass** das antimikrobielle Mittel Triclosan ist.

10. Verfahren nach einem der Ansprüche 1 bis 9, **dadurch gekennzeichnet, dass** das Klebemittel ein druckempfindliches Klebemittel ist.

11. Verfahren nach einem der Ansprüche 1 bis 10, **dadurch gekennzeichnet, dass** das Klebemittel ein abziehbares Klebemittel ist.

12. Verfahren nach einem der Ansprüche 1 bis 11, **dadurch gekennzeichnet, dass** die Oberfläche des Gegenstands eine nicht ebene Oberfläche ist.

13. Verfahren nach einem der Ansprüche 1 bis 12, **dadurch gekennzeichnet, dass** die Oberfläche des Gegenstands aus Material ausgewählt aus Hölzern sowie steifen Kunststoffen, Kunststoffen, mineralischen oder metallischen Materialien besteht.

14. Verfahren nach einem der Ansprüche 1 bis 13, **dadurch gekennzeichnet, dass** der Gegenstand ein Haushaltsgegenstand, ein Einrichtungsgegenstand oder ein innerer Gebäudegegenstand ist, vorzugsweise für Orte, die für die Öffentlichkeit offen und dem Risiko einer Kontamination durch Kontakt mit den Gegenständen ausgesetzt sind.

15. Selbstklebende antimikrobielle Folie, umfassend eine Kunststofffolie (1) aus Weich-PVC, die mit einem Klebemittel (2) überzogen ist, wobei die Folie flexibel und mit der Hand dehnbar ist, geeignet ist, der Kontur einer nicht ebenen Oberfläche zu folgen, wobei die Folie ein antimikrobielles Mittel, wie in einem der Ansprüche 1 bis 13 definiert, in ihrer Masse einschließt oder auf der Oberfläche umfasst.

16. Selbstklebende antimikrobielle Folie nach Anspruch 15, **dadurch gekennzeichnet, dass** die Kunststofffolie eine Dicke von 10 bis 500 µm und 10 bis 1000 g/m² aufweist, mit einer Klebeschicht von 1 bis 150 g/m² überzogen ist, einen Gewichtsgehalt an antimikrobiellem Mittel von 0,01 bis 10 %, vorzugsweise 0,1 bis 5 %, bezogen auf das Gesamtgewicht der Folie, und eine flächenbezogene Masse von 0,01 bis 100 g/m², vorzugsweise von 0,05 bis 10 g/m² von antimikrobiellen Mitteln sowie gegebenenfalls eine Lackschicht mit 5 bis 50 µm und 1 bis 100 g/m², vorzugsweise 5 bis 50 g/m² aufweist.

17. Mehrschichtkomplex (5), umfassend eine selbstklebende antimikrobielle Folie (1) nach einem der Ansprüche 15 oder 16, wobei die mit Klebemittel (2) beschichtete Seite der Folie auf einen vorläufigen Schutzliner (3), der eine Papierschicht oder eine nicht klebende zweite Folie umfasst, aufgebracht ist, wobei der Liner vorzugsweise eine flächenbezogene Masse von 50 bis 200 g/m² aufweist.

## Claims

1. A method for the antimicrobial protection of a plane or non-plane surface of a material object, **characterized in that** the face termed the inner face of a self-adhesive plastics film (1) coated on said inner face with a layer of adhesive (2) is applied against the surface of the object, said film being constituted by plasticized PVC, said plasticized PVC film comprising a polymeric plasticizer in a proportion of 5% to 50% by weight in said film, said film being flexible and manually stretchable and capable of following the contour of a said surface, having an elongation at break of more than 50% and an ultimate tensile strength of less than 6000 N/m, and said film incorporating in its material or comprising on its surface termed the outer surface an antimicrobial agent rendering the outer surface of said film active against microbes.

2. A method according to claim 1, **characterized in that** said polymeric plasticizer is selected from polyesters obtained by reacting a diol with a dibasic acid.

3. A method according to claim 1 or claim 2, **characterized in that** the antimicrobial agent is incorporated into a varnish applied to the outer surface of the plastics film, preferably in an amount by weight of 0.1% to 10%, more preferably 0.5% to 5% relative to the weight of said varnish.

4. A method according to any one of claims 1 to 3, **characterized in that** the antimicrobial agent is incorporated into a varnish applied to a calendered plasticized PVC film.

5. A method according to claim 4, **characterized in that** said calendered plasticized PVC has an elongation at break of less than 200%, preferably less than 150%, more preferably 50% to 100%.

6. A method according to any one of claims 1 to 5, **characterized in that** the antimicrobial agent is incorporated into an acrylic polymer-based varnish, preferably acrylic polyester that can be polymerized by curing in light.

7. A method according to claim 1 or claim 2, **characterized in that** the antimicrobial agent is incorporated into the material of the plastics film, preferably in an amount by weight of 0.1% to 10%, more preferably 0.5% to 5% relative to the weight of the film.

8. A method according to claim 7, **characterized in that** the antimicrobial agent is incorporated into the material of a plastic plasticizer PVC film prepared by coating (termed cast PVC) having an elongation at break of more than 100%.

9. A method according to any one of claims 1 to 8, **characterized in that** the antimicrobial agent is triclosan.

10. A method according to any one of claims 1 to 9, **characterized in that** said adhesive is a pressure-sensitive adhesive.

11. A method according to any one of claims 1 to 10, **characterized in that** said adhesive is a removable adhesive.

12. A method according to any one of claims 1 to 11, **characterized in that** said surface of the object is a non-plane surface.

13. A method according to any one of claims 1 to 12, **characterized in that** said surface of the object is formed from a material selected from wood and rigid plastic materials, plastics, minerals or metals.

14. A method according to any one of claims 1 to 13, **characterized in that** said object is a household object, an item of furniture or an interior building fitting, preferably for locations that are open to the public and exposed to a risk of contamination by contact with said objects.

15. An antimicrobial self-adhesive film comprising a said plastics film (1) formed from plasticized PVC coated with an adhesive (2), said film being flexible and manually stretchable in order to be capable of following the contour of a non-plane surface, said film incorporating in its material or comprising at its surface a said antimicrobial agent as defined in one of claims 1 to 13.

16. An antimicrobial self-adhesive film according to claim 15, **characterized in that** said plastics film has a thickness of 10 µm to 500 µm and 10 g/m² to 1000 g/m², coated with a layer of adhesive at 1 g/m² to 150 g/m², having an amount by weight of antimicrobial agent of 0.01% to 10%, preferably 0.1% to 5% relative to the total weight of the film, and a mass per unit area of 0.01 g/m² to 100 g/m², preferably 0.05 g/m² to 10 g/m² of antimicrobial agents and, if appropriate, a layer of varnish of 5 µm to 50 µm and 1 g/m² to 100 g/m², preferably 5 g/m² to 50 g/m².

17. A multilayered composite (5) comprising an antimicrobial self-adhesive film (1) in accordance with claim 15 or claim 16, the adhesive-coated face (2) of said film being applied to a temporary protective liner (3) comprising a layer of paper or a second release film, said liner preferably having a mass per unit area of 50 g/m² to 200 g/m².
